Europäisches Patentamt

European Patent Office

Office européen des brevets

(11) Veröffentlichungsnummer: **0 473 922 A1**

# EUROPÄISCHE PATENTANMELDUNG

(21) Anmeldenummer: **91112166.3**

(51) Int. Cl.5: **B29B 7/18**, B29B 7/24

(22) Anmeldetag: **20.07.91**

(30) Priorität: **05.09.90 DE 4028064**

(43) Veröffentlichungstag der Anmeldung:
**11.03.92 Patentblatt 92/11**

(84) Benannte Vertragsstaaten:
**DE ES FR GB IT NL**

(71) Anmelder: **WERNER & PFLEIDERER
GUMMITECHNIK GMBH
Asdorfer Strasse 60
W-5905 Freudenberg(DE)**

(72) Erfinder: **Engel, Wolfgang**

Höfchenweg 2
W-5905 Freudenberg-Oberfischbach(DE)
Erfinder: **Limper, Andreas, Dr.**
Graf Stauffenbergstrasse 10
W-5963 Wenden-Schönau(DE)
Erfinder: **Häder, Walter**
Lindenstrasse 28
W-5960 Olpe(DE)

(74) Vertreter: **Rau, Manfred, Dr. Dipl.-Ing. et al
Rau & Schneck, Patentanwälte Königstrasse
2
W-8500 Nürnberg 1(DE)**

(54) **Verfahren und Vorrichtung zum Mischen von Mischgut mit thermoplastischem Kunststoff.**

(57) Einem Innenmischer ist eine Kunststoffverarbeitungsmaschine (31) zugeordnet, in der thermoplastischer Kunststoff gesondert aufgeschmolzen und in die Mischkammer (2) des Innenmischers eingespritzt wird, wo er mit Füllstoff, Kautschuk oder dergleichen vermischt wird.

FIG.1

EP 0 473 922 A1

Die Erfindung betrifft ein Verfahren nach dem Oberbegriff des Anspruches 1 und eine Vorrichtung zur Durchführung dieses Verfahrens entsprechend dem Oberbegriff des Anspruches 7.

Sogenannte Innenmischer oder Banbury-Mischer sind in zahlreichen Varianten bekannt. Ihrem Grundprinzip nach handelt es sich um chargenweise betriebene Mischer mit einer Mischkammer, die aus zwei einander teilweise durchdringenden zylindrischen Teil-Mischkammern besteht. In jeder Teil-Mischkammer ist eine Mischwelle mit ein oder mehreren Knetschaufeln angebracht. Diese können ineinander kämmen oder aneinander vorbeilaufen. Entsprechend erfolgt der Antrieb gegensinnig oder gegebenenfalls gleichsinnig. Die Zuführung des Mischgutes erfolgt von oben durch einen Einfüllschacht, der mittels eines Stempels verschließbar ist, der im Bereich des oberen Sattels der Mischkammer angeordnet ist. Im Bereich des unteren Sattels der Mischkammer ist eine Auslaßöffnung. Derartige Mischer sind beispielsweise aus der DE 24 58 568 C2 (entsprechend US 4 058 296) der DE 28 36 940 C2 (entsprechend US 4 234 259) oder der DE 20 59 844 A (entsprechend US Ser.No. 882 560 vom 05.12.1969) bekannt. Derartige Innenmischer werden bevorzugt zum Kneten von Kautschuk und zum Einmischen von Füllstoffen und Additiven in Kautschuk eingesetzt. Sie sind aber auch für eine Vielzahl anderer Misch- und Knetaufgaben geeignet. Das Aufschmelzen von Thermoplasten im Innenmischer, wie es z.B. bei der Herstellung von thermoplastischen Elastomeren oder Kabelcompounds beim Vermischen mit Kautschuk vorkommt, ist außerordentlich zeitaufwendig. Noch schwieriger, wenn nicht sogar unmöglich, ist die Herstellung von hochgefüllten Compounds, bei denen die Füllstoffe möglichst nicht beschädigt werden sollen, also erst dann in den Mischer gefüllt werden sollen, wenn die Grundmasse komplett aufgeschmolzen ist. Wenn hierfür Innenmischer eingesetzt werden, dann bedeutet dies, daß - wenn zuerst die Thermoplaste in Granulat-, Grieß- oder Pulverform eingefüllt werden, der Mischer nur in geringem Umfang gefüllt ist. Die Energieeinleitung in den Thermoplast ist außerordentlich gering mit der Folge, daß das Aufschmelzen extrem lange dauert oder überhaupt nicht stattfindet, zumal in der Regel aus konstruktiven Gründen die Spaltweite zwischen den Knetschaufeln und der Wand der Mischkammer relativ groß ist, zumindest größer als der Korndurchmesser von grießförmigem oder pulverförmigem Thermoplast. In der Regel gilt dies auch für die Korngröße von Granulat im Vergleich zu den Spaltweiten zwischen den Knetschaufeln und der Wand der Mischkammer. Auch wenn die Granulatkorngröße größer als der Spalt ist, werden die Granulate im wesentlichen an den Knetschaufeln entlang rollen und solange nicht im Spalt geschert, bis sie aufgrund von Erwärmung in ausreichendem Maße an der Wand der Mischkammer oder den Knetschaufeln haften.

Es ist weiterhin bekannt, Öle direkt über eine Einspritzdüse in die Mischkammer von Innenmischern einzuspritzen.

Der Erfindung liegt daher die Aufgabe zugrunde, ein Verfahren und eine Vorrichtung der gattungsgemäßen Art anzugeben, mittels derer unter Verwendung eines Innenmischers ein Mischprozeß durchgeführt werden kann.

Diese Aufgabe wird bei einem Verfahren der gattungsgemäßen Art durch die Merkmale im Kennzeichnungsteil des Anspruches 1 und bei einer Vorrichtung der gattungsgemäßen Art durch die Merkmale im Kennzeichnungsteil des Anspruches 7 gelöst. Nach der Erfindung wird der thermoplastische Kunststoff gesondert aufgeschmolzen und in das Mischgut, in der Regel also Füllstoff oder auch Kautschuk, eingespritzt, wobei diese Einspritzung insbesondere in einen Innenmischer erfolgt, in dem das Mischgut mit dem eingespritzen Kunststoff vermischt wird. Der anschließende Mischprozeß im Innenmischer geht sehr schnell und für das Mischgut wie den aufgeschmolzenen Kunststoff sehr schonend vonstatten.

Zahlreiche weitere Merkmale, Einzelheiten und Vorteile der Erfindung ergeben sich aus der nachfolgenden Beschreibung eines Ausführungsbeispiels anhand der Zeichnung. Es zeigt:

Fig. 1 eine aus einem Innenmischer und einer Kunststoffverarbeitungsmaschine bestehende Vorrichtung zum Mischen von Mischgut mit thermoplastischem Kunststoff in schematischer Darstellung im Querschnitt und

Fig. 2 eine ein Rückschlagventil betreffende Einzelheit aus Fig. 1 in vergrößertem Maßstab.

Sogenannte Innenmischer, die auch als Banbury-Mischer bezeichnet werden, sind in ihrem Grundaufbau ganz allgemein bekannt. Der in der Zeichnung dargestellte Innenmischer weist in üblicher Weise ein Gehäuse 1 auf, in dem eine Mischkammer 2 ausgebildet ist, die durch zwei zylindrische Teil-Mischkammern 3, 4 gebildet wird, deren Achsen 5, 6 parallel zueinander verlaufen und die einander teilweise durchdringen. In der Nähe der Wände 7, 8 der Teil-Mischkammern 3, 4 sind Temperierkanäle 9 vorgesehen. Der Mischkammer 2 kann ein zu verarbeitendes Material als Mischgut durch einen Einfüllschacht 10 von oben entsprechend dem Einfüllrichtungspfeil 11 zugeführt werden. Es wird gegebenenfalls mittels eines in dem Einfüllschacht 10 entsprechend dem Doppel-Richtungspfeil 12 verschiebbaren Stempel 13 in die Mischkammer 2 gedrückt. Der Stempel 13 dient gleichzeitig zum Verschließen der Mischkammer 2 zum Einfüllschacht 10 hin. Er weist hierzu im Verlauf der Wände 7, 8 liegende Begrenzungswände 14, 15 auf, die einen Sattel 16 der einander teilweise durchdringenden zylindrischen Teil-Mischkammern 3, 4 begrenzen.

Im unteren Sattel 17 der Mischkammer 2 ist eine mittels einer Entleerungsklappe 18 verschließbare Entleerungsöffnung 18a angeordnet. Die Entleerungsklappe 18 kann entsprechend dem Öffnungs-Richtungspfeil 19 nach unten weggeschwenkt werden. Sie ist ebenfalls mit Temperierkanälen 20 versehen und weist Begrenzungswände 21, 22 auf, die deckungsgleich mit den Wänden 7, 8 sind und den unteren Sattel 17 begrenzen.

Fluchtend mit den Achsen 5, 6 sind in den beiden Teil-Mischerkammern 3, 4 Wellen 23, 24 angeordnet, die von einem nicht dargestellten Motor in üblicher Weise drehantreibbar sind. Auf den Wellen 23, 24 sind Knetschaufeln 25, 26 angeordnet, die sich in Richtung der Achsen 5, 6 erstrekken und schraubenlinienförmig über den Umfang der Wellen 23 bzw. 24 verwunden sind und die jeweils unter Freilassung eines Spaltes 27, 28 zur Wand 7 bzw. 8 der Mischkammer 2 umlaufen. Aufgrund der Durchdringung der Teil-Mischkammern 3, 4 greifen die Knetschaufeln 25, 26 beim Umlauf ineinander, d. h. sie kämmen. Um dies zu ermöglichen, laufen die Wellen 23, 24 und damit die Knetschaufeln 25, 26 entsprechend den Drehrichtungspfeilen 29, 30 gegensinnig zueinander um.

Es ist auch möglich, daß die Knetschaufeln so ausgebildet sind, daß sie beim Umlauf einander nur tangieren, also nicht ineinandergreifen. In einem solchen Fall werden die Wellen regelmäßig gleichsinnig angetrieben.

Soweit der Innenmischer bisher beschrieben worden ist, ist er allgemein bekannt.

Weiterhin ist eine Kunststoffverarbeitungsmaschine 31 vorgesehen, bei der es sich um eine ein- oder zweiwellige Schneckenmaschine handelt. Es kann sich um eine Spritzgießmaschine oder einen Extruder handeln. Sie ist an die Mischkammer 2 des Innenmischers angeschlossen.

Die Kunststoffverarbeitungsmaschine 31 weist in üblicher Weise ein Gehäuse 32 auf, in dem eine Schneckenwelle 33 angeordnet ist, auf der nicht dargestellte zusätzliche Misch- und Knetelemente angeordnet sein können. Die Schneckenwelle 33 wird von einem Antriebsmotor 34 über ein Getriebe 35 angetrieben. An ihrem dem Innenmischer abgewandten Ende ist sie mit einem hydraulisch beaufschlagbaren Kolben-Zylinder-Antrieb 36 verbunden, mittels dessen die Schneckenwelle 33 im Gehäuse 32 in Richtung ihrer Achse 37 verschoben werden kann. Die Begrenzung dieser Verschiebebewegung erfolgt über Endschalter 38, 39.

An dem dem Innenmischer abgewandten Endbereich mündet ein Zuführtrichter 40 für üblicherweise in Form von Granulat 41 oder Grieß oder Pulver vorliegenden aufzuschmelzenden Kunststoff in das Gehäuse 32. Am anderen Ende mündet das Gehäuse 32 mit einem Spritzkanal 42 in die Mischkammer 2 des Innenmischers. Dem Spritzkanal 42 ist im Gehäuse 32 eine Schmelzekammer 43 vorgeordnet, in der aufgeschmolzener Kunststoff gesammelt wird. Das Aufschmelzen erfolgt von der Zuführung durch den Zuführtrichter 40 aufgrund der mechanischen Beanspruchung durch die Schneckenwelle 43 und unter Zuführung von Wärme durch am Gehäuse 32 angebrachte Heizungen 44 unter gleichzeitiger Förderung in Richtung zur Schmelzkammer 43. Durch entsprechende hydraulische Beaufschlagung des Antriebes 36 und dadurch bewirkte Verschiebung der Schneckenwelle 33 in Spritzrichtung 45, d. h. in Richtung zur Mischkammer 2 des Innenmischers, wird mittels der Schneckenwelle 33 aufgeschmolzener Kunststoff aus der Schmelzekammer 43 durch den Spritzkanal 42 in die Mischkammer 2 eingespritzt. Die dargestellte Kunststoffverarbeitungsmaschine 31 arbeitet also nach dem Schneckenkolben-Spritzgießprinzip.

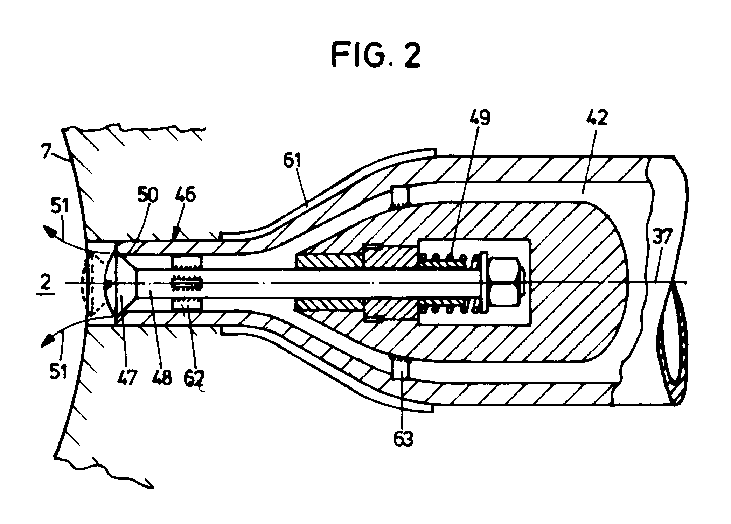

An der Einmündung des Spritzkanals 42 in die Mischkammer 2 des Innenmischers ist ein Ventil 46 angeordnet, das nur öffnet, wenn von der Kunststoffverarbeitungsmaschine 31 aufgeschmolzener Kunststoff durch den Spritzkanal 42 in die Mischkammer 2 eingespritzt wird. Ansonsten ist dieses Ventil 46 geschlossen. Es kann sich demzufolge um ein Rückschlagventil handeln, das unter dem Druck der aus der Kunststoffverarbeitungsmaschine 31 mittels der Schneckenwelle 33 ausgespritzten Kunststoffschmelze öffnet, wie es in Figur 2 dargestellt ist. Es kann sich aber auch um ein elektromagnetisch, hydraulisch oder pneumatisch betätigbares gesteuertes Ventil handeln, wie es im Grundsatz handelsüblich ist.

Das in Figur 2 dargestellte als Rückschlagventil ausgebildete Ventil 46 weist einen mit einem Ventilteller 47 versehenen Ventilstößel 48 auf, der an seinem dem Ventilteller 47 abgewandten Ende mittels einer vorgespannten Druck-Feder 49 derart belastet ist, daß der Ventilteller gegen einen Ventilsitz 50 in die Schließstellung des Ventils 46 gezogen wird. Der Ventilstößel 48 ist im Spritzkanal 42 angeordnet, der ihn zylinderringförmig umgibt. Wenn die Schmelze durch den Spritzkanal 42 in Richtung zur Mischkammer 2 gepreßt wird, dann wird der Ventilteller 47 vom Ventilsitz 50 in die in Figur 2 gestrichelt dargestellte Lage abgehoben, so daß die Schmelze entsprechend den Einspritz-Richtungspfeilen 51 in die Mischkammer 2 eingespritzt wird. Am Ende des Einspritzvorgangs, wenn also der Druck vom Ventilteller 47 genommen wird, wird der Ventilteller 47 vom Ventilstößel 48 wieder durch die Druck-Feder 49 in seine Schließstellung gezogen. Durch dieses Ventil 46, dessen Ventilteller 47 möglichst unmittelbar in der Wand 7 der Mischkammer 2 liegt, wird verhindert, daß von der Mischkammer her Material in die Kunststoffverarbeitungsmaschine 31 eindringen kann.

Anstelle der geschilderten, als Schneckenkolben-Spritzgießmaschine ausgebildeten Kunststoffverarbeitungsmaschine können auch weitere bekannte Plastifizier-Einspritzeinheiten als Kunststoffaufschmelz- und Einspritzeinheiten eingesetzt werden, und zwar insbesondere solche, bei denen eine Vorplastifizierung des Kunststoffes mittels einer Schnecke erfolgt und anschließend die Einspritzung mittels eines gesonderten antreibbaren Kolbens vorgenommen wird. Auch solche Vorrichtungen sind in der Praxis bekannt (s. beispielsweise Fachbuch von A. Limper/P. Barth/F. Grajewski "Technologie der Kautschukverarbeitung", Carl Hanser Verlag München Wien, 1989, Seiten 161 bis 163). Entscheidend ist, daß eine sehr genaue Dosierung der einzuspritzenden Menge an aufgeschmolzenem Kunststoff erfolgen kann. Dies wird beim dargestellten Ausführungsbeispiel dadurch realisiert, daß die Größe des Hubes a der Schneckenwelle 33 durch entsprechende Einstellung der Endschalter 38, 39 festgelegt bzw. verändert werden kann. Bei der weiterhin erwähnten Kolbeninjektion mit Schneckenvorplastifizierung wird diese Dosierung ebenfalls durch entsprechende Wahl des Hubes des Kolbens vorgenommen.

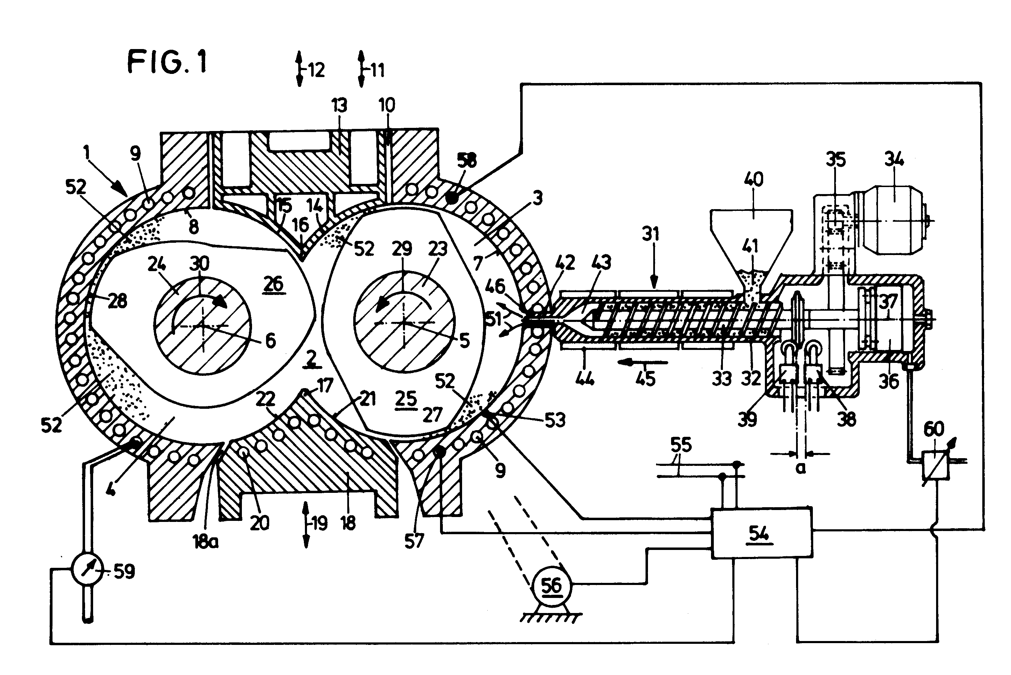

Durch den Einfüllschacht 10 werden bei hochgefahrenem Stempel 13 Füllstoffe in die Mischkammer 2 eingegeben. Anschließend wird der Stempel 13 in die in Figur 1 dargestellte geschlossene Stellung gebracht. Die Knetschaufeln 25, 26 werden in Richtung der Drehrichtungspfeile 29, 30 in Bewegung gesetzt.

Die Temperatur des von den Knetschaufeln 25, 26 umgewälzten Mischguts 52 wird mittels in der Mischkammer angeordneter nur angedeuteter Temperaturfühler 53 gemessen und ein entsprechendes Signal zur Steuerung 54 gegeben. Das Drehmoment der Wellen 23, 24 und damit der Knetschaufeln 25, 26 wird ebenfalls über die Steuereinheit 54 erfaßt, indem an der Stromversorgungsleitung 55 für den nicht dargestellten Antrieb der Wellen 23, 24 dessen Leistungsaufnahme gemessen wird. Weiterhin kann ein mit einer Welle 23 gekoppelter Winkelstellungsgeber 56 vorgesehen sein, der Winkelstellungssignale auf die Steuereinheit 54 gibt, so daß fortlaufend die Winkelstellung der Knetschaufeln 25, 26 und insbesondere damit auch die Lage der Knetschaufel 25 zum Ventil 46 erfaßt wird.

Schließlich wird noch die Eingangstemperatur und die Ausgangstemperatur des Temperiermediums durch entsprechende Temperaturfühler 57, 58 erfaßt und zur Steuereinheit 54 gemeldet. Darüber hinaus wird mittels eines Durchflußmengenmessers 59 die Durchflußmenge an Temperiermedium erfaßt und zur Steuereinheit 54 gemeldet. Aus der über die Temperaturfühler 57, 58 erfaßten Temperaturdifferenz und der vom Durchflußmengenmesser 59 erfaßten Durchflußmenge kann ermittelt werden, wieviel Energie über das Temperiermedium zugeführt oder abgeführt wird. Über die Leistungsmessung an der Stromversorgungsleitung 55 kann die den nicht dargestellten Antrieben zugeführte Energie gemessen werden. Die Summe der den Antrieben zugeführten Energie und der über das Temperiermedium zu- bzw. abgeführten Energie ergibt - unter Berücksichtigung des Wirkungsgrades der Antriebe und der Wärmeverluste des Innenmischers - die in das Mischgut 52 eingebrachte Energie.

Die zeitliche Steuerung der Einspritzung des aufgeschmolzenen Kunststoffes erfolgt über der Mischguttemperatur, und/oder dem aktuellen Drehmoment und/oder der Mischzeit und/oder der Summe der eingebrachten Energie und/oder der aktuellen Winkelstellung einer Welle 23 oder 24 oder beider Wellen 23, 24. Über den Winkelstellungsgeber 56 kann sichergestellt werden, daß das Einspritzen jeweils in das Mischgut 52 erfolgt, wenn dieses vor dem Ventil 46 vorbeiläuft, um auf diese Weise bereits eine gute Vorverteilung im Mischgut 52 zu erreichen und um sicherzustellen, daß es nicht auf die Knetschaufel 25 aufgesprüht wird. Die Ansteuerung des Kolben-Zylinder-Antriebs 36 erfolgt über ein von der Steuereinheit 54 angesteuertes Magnetventil 60. Wenn der aufgeschmolzene Kunststoff eingespritzt wird, bevor das Mischgut zugegeben wird, dann kommt der Winkelstellung der Knetschaufeln keine Bedeutung zu.

Das Ventil 46 ist mit einer Heizung 61 versehen, die sicherstellt, daß der aufgeschmolzene Kunststoff bis zum Ventilteller 47 die gleiche Temperatur aufweist wie in der Schmelzekammer 43 der Kunststoffverarbeitungsmaschine 31. Wie in Fig. 2 erkennbar ist, ist der Ventilstößel 48 mit Führungsstegen 62, 63 im Ventil 46 geführt und abgestützt.

Die geschilderte Vorrichtung und das geschilderte Verfahren sind insbesondere einsetzbar, wenn hochgefüllte, thermoplastische Compounds hergestellt werden sollen oder wenn thermoplastische Elastomere oder Kabelcompounds aus Kautschuk, Thermoplasten und Füllstoffen, gemischt werden sollen.

**Patentansprüche**

1. Verfahren zum Mischen von Mischgut, wie Füllstoffen und/oder Kautschuk, mit thermoplastischem Kunststoff, wobei der Kunststoff aufgeschmolzen wird und das Mischgut und der aufgeschmolzene Kunststoff einem gemeinsamen Mischprozeß unterworfen werden, dadurch gekennzeichnet, daß der Kunststoff vom Mischgut gesondert aufgeschmolzen und eingespritzt wird und daß anschließend der gemeinsame Mischprozeß stattfindet.

2. Verfahren nach Anspruch 1, dadurch gekennzeichnet, daß der Kunststoff dem Mischgut durch Einspritzen zugegeben wird.

3. Verfahren nach Anspruch 1, dadurch gekennzeichnet, daß zuerst der Kunststoff eingespritzt und dann das Mischgut zugegeben wird.

4. Verfahren nach einem der Ansprüche 1 bis 3, dadurch gekennzeichnet, daß das Einspritzen des Kunststoffs in Abhängigkeit von der Temperatur des Mischgutes erfolgt.

5. Verfahren nach einem der Ansprüche 1 bis 4, dadurch gekennzeichnet, daß das Einspritzen des Kunststoffs in Abhängigkeit von der dem Mischgut insgesamt zugeführten Energie erfolgt.

6. Verfahren nach einem der Ansprüche 1 bis 5, dadurch gekennzeichnet, daß das Einspritzen des Kunststoffes in Abhängigkeit von der Stellung von zum Mischen dienenden Knetschaufeln erfolgt.

7. Vorrichtung zur Durchführung des Verfahrens nach einem der Ansprüche 1 bis 6, dadurch gekennzeichnet, daß ein Innenmischer vorgesehen ist, an dessen Mischkammer (2) eine Kunststoffverarbeitungsmaschine (31) mit einer Spritzeinheit mittels eines Spritzkanals (42) angeschlossen ist.

8. Vorrichtung nach Anspruch 7, dadurch gekennzeichnet, daß im Spritzkanal (42) benachbart zur Mischkammer (2) ein Ventil (46) vorgesehen ist.

9. Vorrichtung nach Anspruch 7, dadurch gekennzeichnet, daß die Kunststoffverarbeitungsmaschine (31) als Schneckenmaschine ausgebildet ist.

10. Vorrichtung nach Anspruch 9, dadurch gekennzeichnet, daß die Kunststoffverarbeitungsmaschine (31) als Spritzgießmaschine ausgebildet ist.

11. Vorrichtung nach Anspruch 9, dadurch gekennzeichnet, daß die Kunststoffverarbeitungsmaschine (31) als Extruder ausgebildet ist.

12. Vorrichtung nach Anspruch 7, dadurch gekennzeichnet, daß die Kunststoffverarbeitungsmaschine mit Spritzeinheit als Schneckenkolben-Spritzgießmaschine ausgebildet ist.

13. Vorrichtung nach einem der Ansprüche 8 bis 12, dadurch gekennzeichnet, daß das Ventil (46) als Rückschlagventil ausgebildet ist.

14. Vorrichtung nach Anspruch 9, dadurch gekennzeichnet, daß zwischen der Schneckenmaschine und dem Spritzkanal eine gesonderte Kolben-Spritzeinheit vorgesehen ist.

15. Vorrichtung nach einem der Ansprüche 7 bis 14, dadurch gekennzeichnet, daß das Ventil (46) mit einer Heizung (62) versehen ist.

16. Vorrichtung nach einem der Ansprüche 7 bis 15, dadurch gekennzeichnet, daß das Ventil (46) ansteuerbar ausgebildet ist.

FIG.1

# FIG. 2

**EUROPÄISCHER RECHERCHENBERICHT**

Nummer der Anmeldung

**EP 91 11 2166**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | DE-A-3 604 447 (LAMMENS)<br>* Patentanspruch 1 *<br>– – – | 1 | B 29 B 7/18<br>B 29 B 7/24 |
| A | FR-A-1 268 666 (DUNLOP)<br>* Zusammenfassung; Figuren *<br>– – – | 7 | |
| A | US-A-3 519 469 (BERRONG)<br>* Zusammenfassung *<br>– – – | 1 | |
| A | DE-A-2 354 529 (VEB)<br>– – – | | |
| A | US-A-2 905 361 (NOALL)<br>– – – | | |
| A | US-A-3 484 507 (SMITH)<br>– – – | | |
| A | US-A-1 435 616 (MOSHER)<br>– – – – – | | |

**RECHERCHIERTE SACHGEBIETE (Int. Cl.5)**

B 29 B
B 01 F
B 27 N

Der vorliegende Recherchenbericht wurde für alle Patentansprüche erstellt

| Recherchenort | Abschlußdatum der Recherche | Prüfer |
|---|---|---|
| Den Haag | 11 November 91 | PEETERS S. |